# EUROPEAN PATENT SPECIFICATION

(11) **EP 1 903 148 B1**
(45) Date of publication and mention of the grant of the patent: **19.03.2014**
(21) Application number: 07116857.9
(22) Date of filing: 20.09.2007
(51) Int. Cl.: E02F 5/00, B09C 1/00, B65D 88/02, B65D 90/62

(54) **Method for removing polluted soil**
Verfahren zur Entfernung von verunreinigtem Boden
Procédé pour l'enlèvement de sol contaminé

(30) Priority: 22.09.2006 IT TO20060675
(43) Date of publication of application: 26.03.2008
(73) Proprietor: Trevi S.p.A., 47522 Cesena (Forli Cesena) (IT)
(72) Inventor: Siepi , Maurizio, I-47522 Cesena (FC) (IT)
(74) Representative: Fioravanti, Corrado

(56) References cited:
- EP-A- 0 278 557
- EP-A- 0 362 856
- EP-A- 0 470 297
- DE-C1- 4 110 587

## Description

The present invention relates to a method for removing soil polluted by contaminants. A method according to the preamble of claim 1 is disclosed in EP-A-0 278 557.

Areas polluted by solid, liquid or gaseous contaminants are frequently encountered, in places where contaminated soil must be excavated and taken to areas allocated for disposal (such as authorized tips or incinerators). However, the extent of the polluted areas is sometimes so great that excavation in a short period and in a single operation is impossible. Corrosive or toxic pollutants are also frequently encountered, and contact with these must be avoided at all stages of the process. In other cases, the pollutants are volatile and flammable, giving rise to health hazards and risks of possible explosion or combustion, and must be contained.

In order to overcome the aforesaid problems, an object of the present invention is to propose a method for the effective removal of polluted soil. Another object of the invention is to prevent the dispersion of the pollutants into the environment.

These and other objects and advantages are achieved, according to the invention, by a method as defined in Claim 1. Other important characteristics of the method according to the invention are defined in the dependent claims.

The invention will now be described; reference will be made to the attached drawings, in which:
- Figures 1 to 3 are schematic plan views of some steps of the method according to the invention applied to an area of polluted soil to be removed;
- Figure 4 is a schematic plan view of some containers according to the invention;
- Figure 5 is a partial view in vertical section of one of the containers of Figure 4;
- Figure 6 is a perspective view of the upper part of the container of Figure 5;
- Figures 7 and 8 are, respectively, a schematic partially exploded perspective view and a schematic view in vertical section of the lower part of an alternative embodiment of a container according to the invention;
- Figure 9 is a schematic plan view, similar to that of Figure 4, of some containers according to a further embodiment of the invention; and
- Figure 10 is a partial view in vertical section of one of the containers of Figure 9.

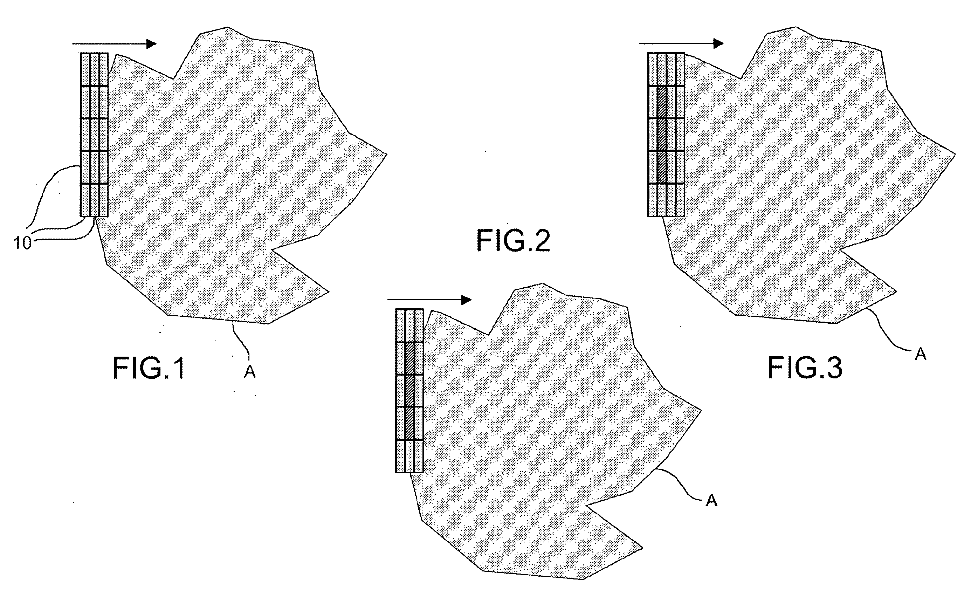

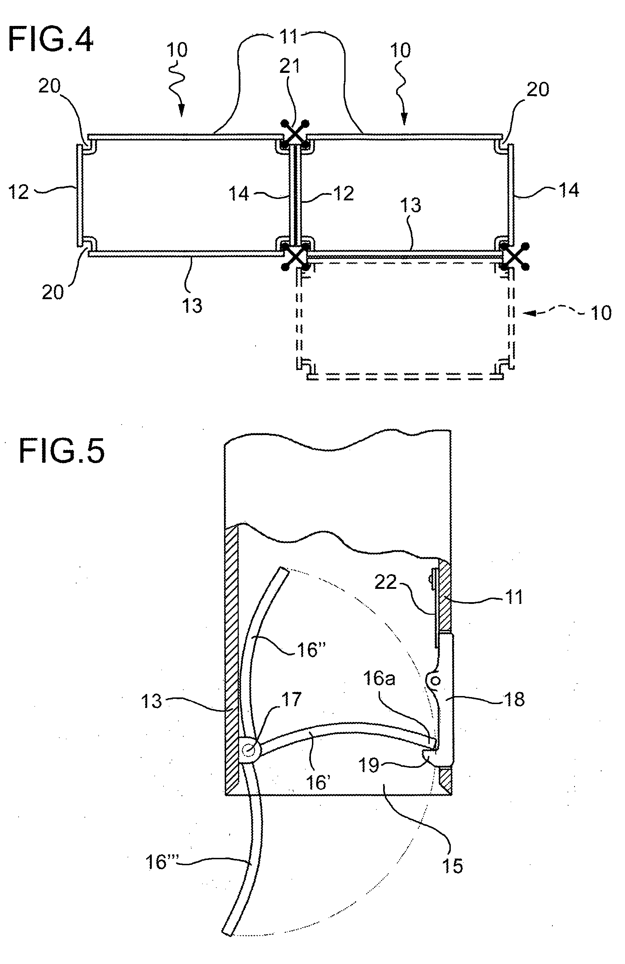

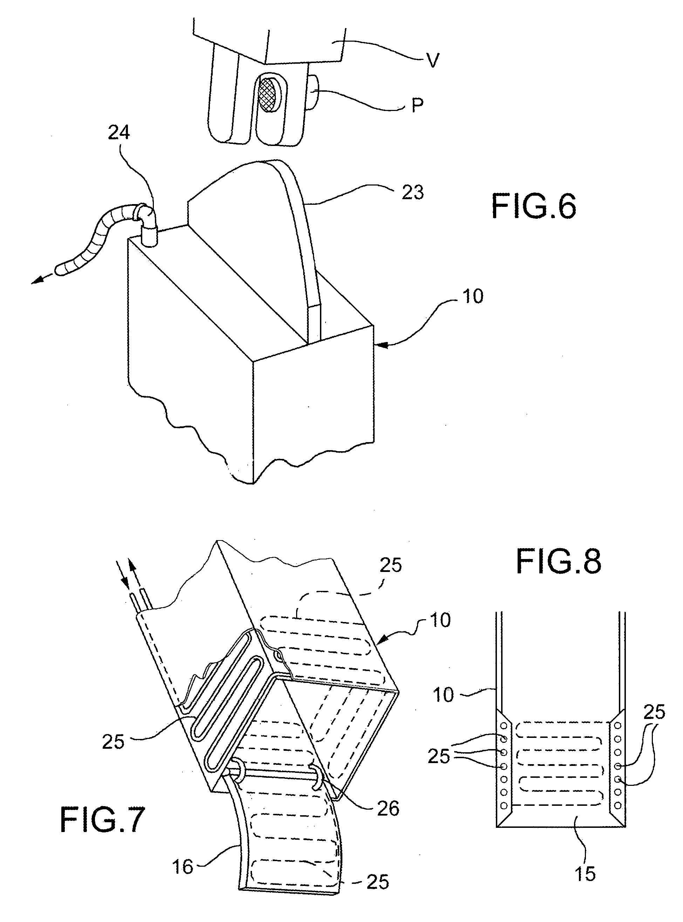

With initial reference to Figure 1, the letter A indicates schematically an area of polluted soil which is to be removed. According to the invention, the polluted soil is removed by taking out portions of soil in a grid pattern, making use of a set of modular containers 10 (Figures 4 and 5) which are driven in sequence into the polluted soil, adjacent to each other. In the preferred embodiment of the invention, each container has a generally prismatic, and preferably parallelepipedal, shape, which is vertically elongated with vertical side walls 11, 12, 13, 14 and a bottom opening 15 which can be closed and opened by a closable bottom wall 16 hinged at 17 to one of the side walls 13 so that it can swing about a horizontal axis. The bottom wall 16 can selectively assume a closed horizontal position 16', a loading position 16" in which it is open and raised inside the container, and an open discharge position 16"', in which it is rotated downwards. The containers 10 are closed at their tops (Figure 6).

On a vertical wall 11 of the container opposite that which has the hinge 17, there is mounted a fastening device 18 having a stop tooth 19 projecting into the container to fasten the edge 16a of the bottom wall 16 and retain this wall in the closed position 16'. The stop tooth 19 is preferably rounded in its lower part to facilitate the movement of the wall from the discharge position 16"' to the closed position 16'. The fastening device 18 can have a hinged mounting, and can be associated with one or more return springs 22 which tend to bring it into its closing position. The fastening device can be actuated manually, or by a mechanically or hydraulically operated release mechanism, using a remote control system if necessary.

With reference to Figure 1 again, the polluted soil is taken out, starting in a peripheral region, with at least three rows of containers 10 being driven downwards into the polluted soil in such a way that at least one of them is completely surrounded laterally by other similar containers. A container can be driven into the soil by driving methods used for sheet piles or metal tubes, for example by using a vibratory pile driver V (shown partially in Figure 6). The vibratory pile driver is provided with a hydraulic clamp P for firmly holding an upper grip portion 23 of the container 10.

During the driving process, the polluted soil enters the container through the bottom opening 15, causing the bottom wall 16 to rotate upwards inside the container (position 16", Figure 5). When the container is full, or has been filled to a level appropriate to the depth of the layer of polluted soil to be taken out, it is extracted by lifting. When the lifting of the container is started, the soil inside it causes the bottom wall to rotate to the horizontal position 16' against the stop tooth 19, thus closing the opening 15.

Preferably, the bottom wall 16 is slightly curved or bent in such a way that, in its raised position 16', the soil on top of it weighs on it, tending to make it rotate towards its closed position.

It will be noted that, with a container configuration such as that shown in Figure 5, at the start of extraction the soil located in the lowest part of the container falls out of the bottom opening 15 until the moment at which the movable wall 16 closes. Consequently, in order to achieve the complete removal of the polluted soil which is to be taken out, it is preferable to drive in the containers to a depth slightly below the lowest depth of the polluted soil, in such a way that the portion of the soil which falls out of the opening 15 is uncontaminated.

The geometric shape of the containers, which can be different from the parallelepipedal shape illustrated, must in all cases be such that each container mates with the adjacent containers so as to enable the whole volume of soil in question to be taken out. Vertical guide grooves 20 (Figure 4) are advantageously formed on the outer surface of the lateral walls, in such a way that each container is guided, during its driving, by the adjacent containers which have already been driven in. The slidable connection can be made by using grooves 20 with vertical guide elements 21 formed separately from the containers or, in a variant which is not shown, formed as integral parts of the containers themselves.

As shown in Figure 2, the containers of the central row can be extracted when filled with polluted material, and their place can be taken by natural soil, sand, gravel or other material. In this step, the containers on the outer perimeter act as confining and supporting walls to prevent the collapse of the surrounding soil. The sequence proceeds in the direction indicated by the arrow in Figures 1-3, with the driving of new containers (Figure 3), extending the perimeter and consequently the central volume taken out or replaced, until the excavation of the polluted area A is complete.

The containers can be loaded on to a goods vehicle while still full, for transport to the final destination. The transportable length imposes a limit of about 15 metres on the depth that can be taken out with this method. This can be overcome by preliminary treatment to form a "base buffer layer" at this depth by injecting a binder which creates an impermeable and chemically inert layer. The first sequence of taking out soil is stopped slightly above this level, so as to prevent the emission of polluting gases from the base buffer layer. A second sequence is carried out from this level to the point required, to completely remove all the polluted soil.

In an alternative embodiment (Figures 7 and 8), cooling coils 25 are incorporated in the vertical side walls of the container for the circulation of a fluid which freezes the soil enclosed in the lower region of the container. The expansion associated with freezing causes this portion of soil to act as a closing plug to keep the soil above it inside the container, and limits the evaporation and emission of volatile substances locally. The plug can be kept frozen during transport by means of a connection to a mobile refrigeration installation or to liquid nitrogen cylinders and an automatic supply installation.

As shown in Figure 7, part of the cooling coil 25 for the circulation of the coolant fluid can also be incorporated in the closable bottom wall 16. In this case, the circuit includes portions of flexible hose 26.

Gas and volatile substances which may be evolved by mechanical and thermal action due to the driving process can accumulate in the upper part of the container while it is being driven in. It may be useful to analyse these substances in order to decide on the subsequent steps of storage and treatment of the polluted soil which has been taken out. Since the accumulation of gas in the top part of the container can also impede the driving process, each container can be provided with an upper outlet 24 (Figure 6) with a shut-off valve, to be connected to suitable reservoirs for the storage and subsequent treatment of these gaseous substances. Depending on the circumstances, these substances can be stored during the driving process or before the emptying of the container.

If the polluted soil is unstable or impregnated with water or other liquids, the pressure drop occurring during the extraction of the container can cause it to be siphoned from the bottom. Collapses of the sides are prevented only if the container which is extracted is surrounded by other containers. In this case, it is preferable to create a so-called "base buffer layer", as mentioned above, beforehand. An alternative solution is to extend the freezing to the surrounding and underlying soil, with a concentration of cooling coils in the region concerned.

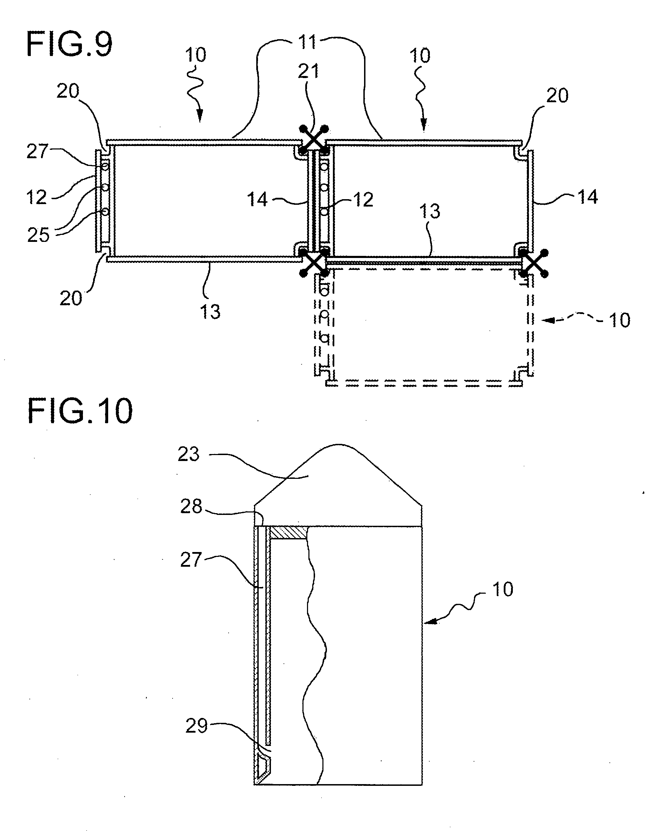

As a further alternative (Figures 9 and 10) for preventing siphoning, the pressure drop can be compensated by introducing a fluid (such as water) during the extraction step, through one or more vertical tubes 27 incorporated in the vertical walls of the containers and each having an inlet aperture 28 in the upper part of the container and an outlet aperture 29 in the lower part.

## Claims

1. A method for removing polluted soil distributed over an area (A), the method comprising the following steps:
a) providing a plurality of modular containers (10) each having a prismatic, vertically elongated shape, with a closed upper end, vertical side walls (11-14), vertical guide means (20) associated with the side walls (11-14), a bottom opening (15) and means (18, 25) for causing the closure of the bottom opening;
b) positioning the plurality of modular containers (10) side by side in such a way that the side walls (11-14) of at least one of the containers are surrounded by side walls of other similar modular containers,
connecting, in a vertically slidable manner, the vertical guide means (20) associated with the side walls (11-14) of a container (10) being driven into the polluted soil with the adjacent containers which have already been driven in, and
driving the plurality of containers (10) in a downward direction in at least part of the polluted area (A) in a grid pattern, with the containers positioned side by side, causing the containers to be at least partially filled with polluted soil introduced through the bottom openings (15);
c) lifting and extracting from the soil the container or containers with their bottom openings closed by the actuation of the said closing means (18), wherein the containers lifted and extracted from the soil are those containers surrounded by side walls of other similar modular containers, whereby these other containers on the outer perimeter of the container(s) being extracted act as confining and supporting walls to prevent the surrounding soil from collapsing;
d) removing the extracted containers, containing polluted soil, from the polluted area,
**characterised in that**
the vertical guide means (20) are vertical guide grooves formed on the outer surface of the container side walls, whereby the side walls of a container driven into the soil are adjacent to the side walls of the containers which have already been driven in, and whereby each container mates with the adjacent containers so as to enable the whole volume of polluted soil to be taken out.

2. A method according to claim 1, **characterized in that** steps b), c) and d) are repeated over the whole area (A) until the polluted soil in the whole of this area is completely removed.

3. A method according to claim 1 or 2, **characterized in that** step b) of the driving of the containers starts from a peripheral region of the polluted area (A).

4. A method according to claim 1, **characterized in that** step c) is preceded by and associated with the step of freezing the soil enclosed in the lower part of the container (10), by circulating a coolant fluid in the lower part of the container, so as to close the bottom opening (15) and retain the soil in the container.

5. A method according to claim 1, **characterized in that**, in step b), the containers are driven into the polluted soil to a level slightly deeper than the lowest level reached by the polluted soil.

6. A method according to claim 1, **characterized in that** step c) is followed by the step of replacing the extracted polluted soil with natural soil, sand, gravel or other material.

7. A method according to claim 1, **characterized in that** the vertical guide means are formed by using vertical guide grooves (20) with separate vertical guide elements (21).

8. A method according to claim 1, **characterized in that** the driving step b) and the lifting and extracting step c) are carried out holding firmly an upper grip portion (23) of the container (10) by a hydraulic clamp.

## Patentansprüche

1. Verfahren zum Entfernen von verunreinigtem Boden, der über einen Bereich (A) verteilt ist, wobei das Verfahren die folgenden Schritte umfasst:
a) Bereitstellen einer Mehrzahl modularer Behälter (10), die jeder eine prismatische, vertikal längliche Form mit einem geschlossenen oberen Ende, vertikale Seitenwände (11-14), vertikale Führungsmittel (20), die mit den Seitenwänden (11-14) assoziiert sind, eine Bodenöffnung (15) und Mittel (18, 25) zum Veranlassen des Schließens der Bodenöffnung aufweisen;
b) Positionieren der Mehrzahl modularer Behälter (10) Seite an Seite auf eine solche Weise, dass die Seitenwände (11-14) zumindest eines der Behälter von Seitenwänden von anderen ähnlichen modularen Behältern umgeben werden,
Verbinden, auf vertikal verschiebbare Weise, der vertikalen Führungsmittel (20), die mit den Seitenwänden (11-14) eines Behälters (10) assoziiert sind, der in den verunreinigten Boden getrieben wird, mit den angrenzenden bzw. benachbarten Behältern, die bereits hineingetrieben wurden, und
Hineintreiben der Mehrzahl modularer Behälter (10) in einer Abwärtsrichtung in zumindest einen Teil des verunreinigten Bereichs (A) in einem Gittermuster, wobei die Behälter Seite an Seite positioniert werden, was bewirkt, dass die Behälter zumindest teilweise mit verunreinigtem Boden gefüllt werden, der durch die Bodenöffnung (15) eingebracht wird;
c) Heben und Herausziehen, aus dem Boden, des Behälters oder der Behälter, wobei ihre Bodenöffnungen durch die Betätigung der Schließmittel (18) geschlossen werden bzw. sind, wobei die Behälter, die aus dem Boden gehoben und herausgezogen werden, diejenigen Behälter sind, die von Seitenwänden von anderen ähnlichen modularen Behältern umgeben sind, wodurch diese anderen Behälter an dem äußeren Umfang bzw. Umfassung des Behälters/der Behälter, der herausgezogen wird/die herausgezogen werden, als Begrenzung und Stützwände agieren, um zu verhindern, dass der umgebende Boden zusammenfällt;
d) Entfernen der herausgezogenen Behälter, die verunreinigten Boden enthalten, aus dem verunreinigten Bereich,
**dadurch gekennzeichnet, dass**
die vertikalen Führungsmittel (20) vertikale Führungsnuten bzw. -rillen sind, die an der äußeren Fläche bzw. Oberfläche der Behälterseitenwände gebildet sind, wodurch die Seitenwände eines Behälters, der in den Boden getrieben wird, angrenzend an bzw. benachbart zu den Seitenwänden der Behälter sind, die bereits hineingetrieben wurden, und wodurch jeder Behälter mit den angrenzenden bzw. benachbarten Behältern zusammenpasst, um zu ermöglichen, dass das gesamte Volumen an verunreinigtem Boden herausgeholt wird.

2. Verfahren nach Anspruch 1, **dadurch gekennzeichnet, dass** die Schritte b), c) und d) über den gesamten Bereich (A) wiederholt werden, bis der verunreinigte Boden in diesem gesamten Bereich vollständig entfernt ist.

3. Verfahren nach Anspruch 1 oder 2, **dadurch gekennzeichnet, dass** der Schritt b) des Hineintreibens der Behälter an einer Umfangs- bzw. Randregion des verunreinigten Bereichs (A) beginnt.

4. Verfahren nach Anspruch 1, **dadurch gekennzeichnet, dass** dem Schritt c) der Schritt des Einfrierens des Bodens, der in dem unteren Teil des Behälters (10) eingeschlossen ist, durch Zirkulierenlassen einer Kühlflüssigkeit in dem unteren Teil des Behälters vorausgeht und mit diesen assoziiert ist, um die Bodenöffnung (15) zu schließen und den Boden in dem Behälter zu halten.

5. Verfahren nach Anspruch 1, **dadurch gekennzeichnet, dass** in Schritt b) die Behälter in den verunreinigten Boden bis auf eine Ebene getrieben werden, die etwas tiefer liegt als die unterste Ebene, die von dem verunreinigten Boden erreicht wird.

6. Verfahren nach Anspruch 1, **dadurch gekennzeichnet, dass** dem Schritt c) der Schritt des Ersetzens des extrahierten verunreinigten Bodens mit natürlichem Boden, Sand, Kies oder anderem Material folgt.

7. Verfahren nach Anspruch 1, **dadurch gekennzeichnet, dass** die vertikalen Führungsmittel unter Verwendung von vertikalen Führungsnuten bzw. -rillen (20) mit separaten vertikalen Führungselementen (21) gebildet werden.

8. Verfahren nach Anspruch 1, **dadurch gekennzeichnet, dass** der Treibschritt b) und der Anhebe- und Herausziehschritt c) ausgeführt werden, indem ein oberer Griffabschnitt (23) des Behälters (10) durch eine hydraulische Klemme festgehalten wird.

## Revendications

1. Procédé d'enlèvement de sol contaminé réparti sur une zone (A), le procédé comprenant les étapes suivantes :
a) fournir une pluralité de récipients modulaires (10) ayant chacun une forme prismatique et allongée verticalement, avec une extrémité supérieure fermée, des parois latérales verticales (11-14), un moyen de guidage vertical (20) associé aux parois latérales (11-14), une ouverture inférieure (15) et un moyen (18, 25) pour provoquer la fermeture de l'ouverture inférieure ;
b) positionner la pluralité de récipients modulaires (10) côte à côte de telle manière que les parois latérales (11-14) d'au moins l'un des récipients sont entourées par les parois latérales d'autres récipients modulaires similaires,
connecter, d'une façon glissant verticalement, le moyen de guidage vertical (20) associé aux parois latérales (11-14) d'un récipient (10) qui est enfoncé dans le sol contaminé avec les récipients adjacents qui y ont déjà été enfoncés, et
enfoncer la pluralité de récipients (10) dans une direction orientée vers le bas dans au moins une partie de la zone contaminée (A) en un motif de grille, les récipients positionnés côte à côte, en provoquant un remplissage au moins partiel des récipients avec le sol contaminé introduit par les ouvertures inférieures (15) ;
c) lever et extraire du sol le ou les récipient(s) avec leurs ouvertures inférieures fermées par l'actionnement dudit moyen de fermeture (18), les récipients levés et extraits du sol étant ceux qui sont entourés par les parois latérales d'autres récipients modulaires similaires, moyennant quoi ces autres récipients sur le périmètre extérieur du ou des récipient(s) que l'on extrait agissent en tant que parois de confinement et de support pour empêcher l'effondrement du sol environnant ;
d) retirer les récipients extraits, contenant du sol contaminé, de la zone contaminée,
**caractérisé en ce que** le moyen de guidage vertical (20) est constitué de rainures de guidage verticales formées sur la surface extérieure des parois latérales de récipient, moyennant quoi les parois latérales d'un récipient enfoncé dans le sol sont adjacentes aux parois latérales des récipients qui y ont déjà été enfoncés, et moyennant quoi chaque récipient s'accouple avec les récipients adjacents pour permettre l'extraction du volume entier de sol contaminé.

2. Procédé selon la revendication 1, **caractérisé en ce que** les étapes b), c) et d) sont répétées jusqu'à ce que le sol contaminé sur la totalité de cette zone soit complètement retiré.

3. Procédé selon la revendication 1 ou 2, **caractérisé en ce que** l'étape b) de l'enfoncement des récipients démarre dans une région périphérique de la zone contaminée (A).

4. Procédé selon la revendication 1, **caractérisé en ce que** l'étape c) est précédée par et associée à l'étape consistant à geler le sol enfermé dans la partie inférieure du récipient (10), en faisant circuler un fluide réfrigérant dans la partie inférieure du récipient, afin de fermer l'ouverture inférieure (15) et de retenir le sol dans le récipient.

5. Procédé selon la revendication 1, **caractérisé en ce que**, à l'étape b), les récipients sont enfoncés dans le sol contaminé jusqu'à un niveau légèrement plus profond que le plus bas niveau atteint par le sol contaminé.

6. Procédé selon la revendication 1, **caractérisé en ce que** l'étape c) est suivie de l'étape consistant à remplacer le sol extrait contaminé par du sol naturel, du sable, du gravier ou un autre matériau.

7. Procédé selon la revendication 1, **caractérisé en ce que** le moyen de guidage vertical est formé en utilisant des rainures de guidage verticales (20) avec des éléments de guidage vertical séparés (21).

8. Procédé selon la revendication 1, **caractérisé en ce que** l'étape d'enfoncement b) et l'étape de levage et d'extraction c) sont exécutées en tenant fermement une partie de préhension supérieure (23) du récipient (10) au moyen d'un dispositif de serrage hydraulique.
